# EUROPEAN PATENT APPLICATION

(11) **EP 4 718 577 A1**
(43) Date of publication of application: **01.04.2026**
(21) Application number: 24158926.6
(22) Date of filing: 21.02.2024
(51) Int. Cl.: H01M 10/613, H01M 10/625, H01M 10/6556, H01M 50/233, H01M 50/249

(54) **CASING WALL STRUCTURE FOR A BATTERY ASSEMBLY**

(71) Applicant: Lilium GmbH, 82234 Wessling (DE)
(72) Inventor: The designation of the inventor has not yet been filed
(74) Representative: Ter Meer Steinmeister & Partner

(57) **Abstract**

The present invention relates to a casing wall structure (100) for a battery assembly (10), wherein the battery assembly (10) comprises at least one stack (12) of battery cells (14), and a casing with a base plate (16) and a top plate (18), the casing wall structure (100) comprising an inner wall (102) facing the battery cell stack (12), an outer wall (104) facing to the outside of the battery assembly (10), and a cold plate (106) which is sandwiched between the inner wall (102) and the outer wall (104), wherein the inner wall (102) is at least partially formed with a smaller thickness than the outer wall (104). The invention further relates to a battery assembly comprising such at least one such casing wall structure and an electrical propulsion aircraft comprising at least one such battery assembly.

## Description

The present invention relates to a casing wall structure for a battery assembly, a battery assembly comprising at least one such casing wall structure, and an electrical propulsion aircraft comprising at least one such battery.

In the design process of battery assemblies, in particular for high-performance transportation applications such as electrical propulsion aircraft, a compromise between various parameters and requirements has to be found. Such battery assemblies are complex units, usually comprising a plurality of individual battery cells, a battery management system and a dedicated cooling system, all of which can be optimized for the particular use case and specifications of the battery assembly.

As an example, it is always desirable to maximize the capacity as well as possible peak power output of such battery assemblies, while at the same time minimizing their form factor and weight. At the same time, safety measures must be taken, for example for the case of a thermal runaway event in one of the battery cells of such battery assemblies and sufficient cooling power has to be provided in order to be able to operate the battery cells in an optimal and safe temperature range. In particular, heat produced during the operation of such battery assemblies has to be removed from the individual cells and then transported outside the battery assembly as a whole, for example in cooperation with a central cooling system of the corresponding superordinate structure in which the battery assembly in question is mounted.

One component of such battery assemblies which serves multiple purposes and can as such be designed and modified in various ways taking into account the desired specifications and form factor of the battery assembly is its casing. Not only does it have to be able to provide structural integrity of the battery assembly as a whole and protect the internal components, such as the battery cells, from outside influences, but it may also serve additional purposes such as cooling and compression of battery cell stacks.

It is thus the object of the present invention to provide an improved casing wall structure for a battery assembly which on the one hand allows for cooling the battery cells of the corresponding battery assembly while on the other hand providing sufficient mechanical strength for the battery assembly in case of impacts or internal thermal runaway events.

For this purpose, according to the present invention, a casing wall structure for a battery assembly is provided, wherein the battery assembly comprises at least one stack of battery cells and a casing with a base plate and a top plate, and wherein the casing wall structure comprises an inner wall facing the battery cell stack, an outer wall facing to the outside of the battery assembly, and a cold plate, which is sandwiched between the inner wall and the outer wall, wherein the inner wall is at least partially formed with smaller thickness than the outer wall.

Thus, by providing the casing wall structure according to the present invention, in which the inner wall and the outer wall are joined by suitable connection means, a layered structure is achieved, which on the one hand provides sufficient mechanical strength and on the other hand by integrating the cold plate between the inner and outer walls, allows for an efficient cooling of the battery cells inside the corresponding wall structure. In particular, by forming the inner plate at least partially with a smaller thickness than the outer wall, the transfer of heat from the battery cells located at the side of the inner wall to the cold plate is facilitated, while the at least partially thicker outer wall can be designed with such properties that it provides sufficient mechanical strength to the overall casing wall structure.

In particular, in the case of a thermal runaway event in one of the battery cells housed within the corresponding casing wall, the inner wall will provide a sealing with respect to combustion gases and excessive heat, while the outer wall will support the encountered mechanical loads and will compress the cold plate to the inner wall during regular operation of the battery assembly for maximized cooling efficiency.

In certain embodiments of the present invention, the cooling plate may be adapted for circulating cooling fluid therein, and may for this purpose be provided with inlet and outlet ports for said cooling fluid as well as internal piping for internally circulating the cooling fluid. Alternatively, the cold plate may in certain embodiments also be formed as a solid-state cooling structure comprising heat transport elements with maximum thermal conductivity, however, it has been shown that the use of cooling fluid increases the cooling efficiency and allows for an integration of the corresponding battery assembly into superordinate cooling systems.

In one particular design thereof, the cold plate may comprise a plurality of parallel band-like structures extending along the casing wall, wherein the inner wall is provided with ridges of increased thickness extending between the plurality of band-like structures in a mounted state of the casing wall structure. By employing this design, the ridges in the inner wall with their increased thickness further increase the mechanical strength of the resulting casing wall structure and may for example serve as interfacing points for mechanical connection elements as will be further described below.

While the thickness of both the inner wall and the outer wall may be chosen according to the concrete design and desired size and capacity of the resulting battery assembly, in one particular embodiment, the thickness of the inner wall in the region of the band-like structures of the cold plate may be between 0.9 and 1.1 mm, preferably about 0.99 mm, and the thickness of the ridges may be between 1.5 and 2.0 mm, preferably about 1.75 mm.

On the other hand, the thickness of the outer wall may be between 1.0 and 1.2 mm, preferably about 1.11 mm. It is obvious that with the thickness ranges just described, the substantially constant thickness of the outer wall falls between the thickness of the inner wall in the region of the band-like structures and the thickness of the ridges of the inner wall. It is also to be understood that the difference in thickness between the two values cited for the inner wall may correspond to the corresponding thickness of the band-like structures of the cold plate, such that a tight fit of all components of the casing wall structure can be achieved.

Furthermore, the casing wall structure according to the present invention may further comprise at least one tension stringer arranged between the inner wall and the outer wall, wherein the at least one tension stringer may be fixed to a plurality of connection elements of the battery cell stack extending through the inner wall, preferably through one of the ridges with increased thickness. The function of said at least one tension stringer is to support cell compression in the stacking direction of the battery cells and additional loads in certain scenarios, such as post-thermal runaway.

In order to be able to accommodate the at least one tension stringer in the layered structure of the casing wall according to the present invention, the outer wall in the region of the at least one tension stringer may be formed bulging away from the inner wall, such that sufficient space is provided to include the at least one tension stringer between said walls. In particular, in embodiments in which the at least one tension stringer extends along one of the ridges of the inner wall, it substantially extends parallel to the band-like structures of the cold plate, such that there is no overlap of said two components of the casing wall structure in order to minimize the thickness of the casing wall structure according to the present invention.

Furthermore, the casing wall structure according to the present invention may additionally comprise a layer of compressible foam arranged between the cold plate and the outer wall in order to achieve close contact between all layers of the casing wall structure.

While in principle, different materials or material combinations may be used for both the inner wall and the outer wall, in certain particular embodiments, the inner wall and/or the outer wall may be made of composite material, in particular comprising carbon-fiber-reinforced polymer and an oxygen barrier layer, wherein the inner wall preferably further comprises an erosion barrier layer and/or an electromagnetic shielding layer. It has been shown that such composite materials offer an optimal compromise between weight and mechanical strength as well as resistive features, while being able to be mass-produced at reasonable costs. By further providing the erosion barrier layer and/or the electromagnetic shielding layer in the inner wall, improved properties in case of thermal runaway events or leakage of one of the battery cells housed inside the casing wall structure can be achieved and electromagnetic properties of the resulting battery assembly can be improved.

According to a further aspect, the present invention also relates to a battery assembly, comprising at least one stack of battery cells, and a casing with a back plate, a top plate and a plurality of side walls, wherein at least one of the side walls is formed by a casing wall structure according to the present invention as just described. Herein, various principal designs of such battery assemblies are conceivable, for example comprising a plurality of battery cell stacks arranged in parallel and/or two casing wall structures according to the present invention included facing one another diagonally.

In particular, the battery cells of the battery assembly may be compressed between the base plate and the top plate of the casing, wherein further by providing the at least one tension stringer as discussed above, the desired compression of the battery cell stacks may be supported over the lifetime of the battery assembly.

The battery assembly according to the invention may further comprise integrated into the at least one battery cell stack at least one plate element interposed between neighboring battery cells, wherein preferably said at least one plate element comprises a plurality of connection elements extending outside at least one of the side walls. Such plate elements may serve to sub-divide the corresponding battery cell stack into a plurality of individual modules with a certain number of battery cells and may provide for thermal isolation of the multiple modules and in particular a hermetic barrier in case of thermal runaway events to locally detain them. As such, the at least one plate element sub-divides the battery cell stack into a plurality of gas-tight compartments, which preferably may comprise the same number of battery cells each.

Herein, the connection elements may be formed as studs, which are secured outside the respective sidewall by means of a nut element. In this manner, the plate element is mechanically connected to the respective sidewall in order to distribute loads and forces acting on the battery cell stack and in particular the plate element, while the integrity of the casing wall structure itself can also be ensured by said mechanical connection.

According to yet another aspect, the present invention relates to an electrical propulsion aircraft, in particular with VTOL ability, comprising a fuselage and at least one pair of wings, at least one electrical propulsion motor, and at least one battery assembly according to the present invention as just described.

Further features and advantages of the present invention will become even clearer from the following description of an embodiment thereof, when viewed together with the accompanying drawings. These drawings show in particular:
- Fig. 1: an exploded view of a battery assembly according to the present invention;
- Fig. 2: the battery assembly of Fig. 1 in a partially mounted state;
- Fig. 3: the inner wall of the casing wall structure of the battery assembly of Figs. 1 and 2;
- Fig. 4: a cross-sectional view of the casing wall structure of the battery assembly of Figs. 1 and 2 along the stacking direction of the battery cell stack; and
- Fig. 5: a schematic view of an electrical propulsion aircraft with VTOL ability, comprising a plurality of battery assemblies according to the present invention.

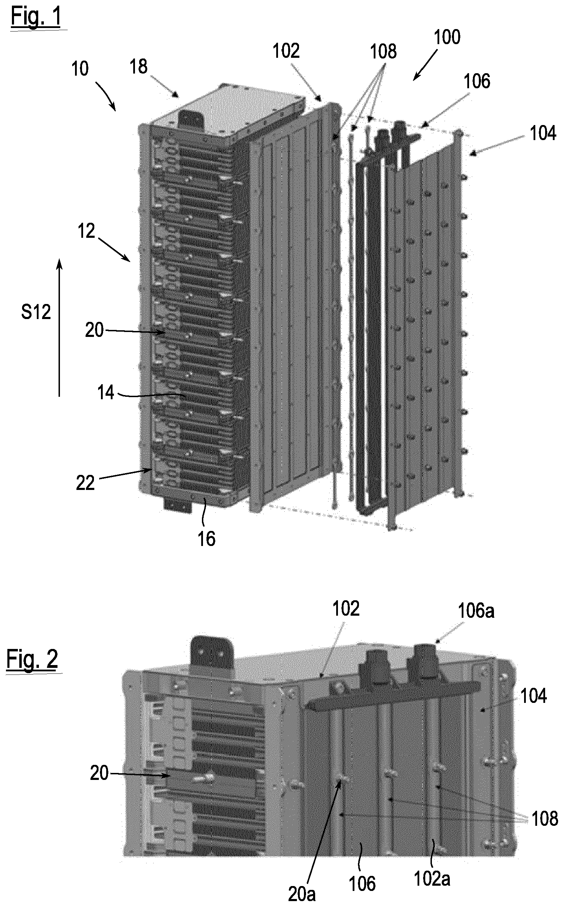

In Fig. 1, a battery assembly to the present invention is shown in an exploded view and generally denoted by reference numeral 10. Said battery assembly 10 comprises a stack 12 of interconnected individual battery cells 14 as well as a base plate 16 and a top plate 18. The battery cell stack 12 along its stacking direction S12 is compressed between the base plate 16 and the top plate 18 and interposed between certain neighboring battery cells, the battery cell stack further comprises a plurality of plate elements 20, which sub-divide the battery cell stack 12 into a plurality of gas-tight compartments or modules 22, which each comprise the same number of battery cells 14.

While in a fully mounted state, the battery assembly 10 of Fig. 1 comprises in total four sidewalls, in the exploded view of Fig. 1, only a single sidewall 100 is shown, which is formed as a casing wall structure according to the present invention. Said casing wall structure 100 in turn comprises an inner wall 102 facing the battery cell stack 12, an outer wall 104 facing to the outside of the battery assembly 10 and a cold plate 106 with a plurality of band-like structures, which in a mounted state of the casing wall structure 100 is sandwiched between the inner wall 102 and the outer wall 104.

Furthermore, the casing wall structure 100 comprises a plurality of tension stringers 108, which are also arranged between the inner wall 102 and the outer wall 104. As can in particular be seen in the partially mounted view of Fig. 2, in which only the outer wall 104 of the casing wall structure 100 is partially omitted, the plurality of tension stringers are fixed to a plurality of connection elements 20a, which form part of the corresponding plate elements 20 of the battery cell stack 12 or are at least attached to them.

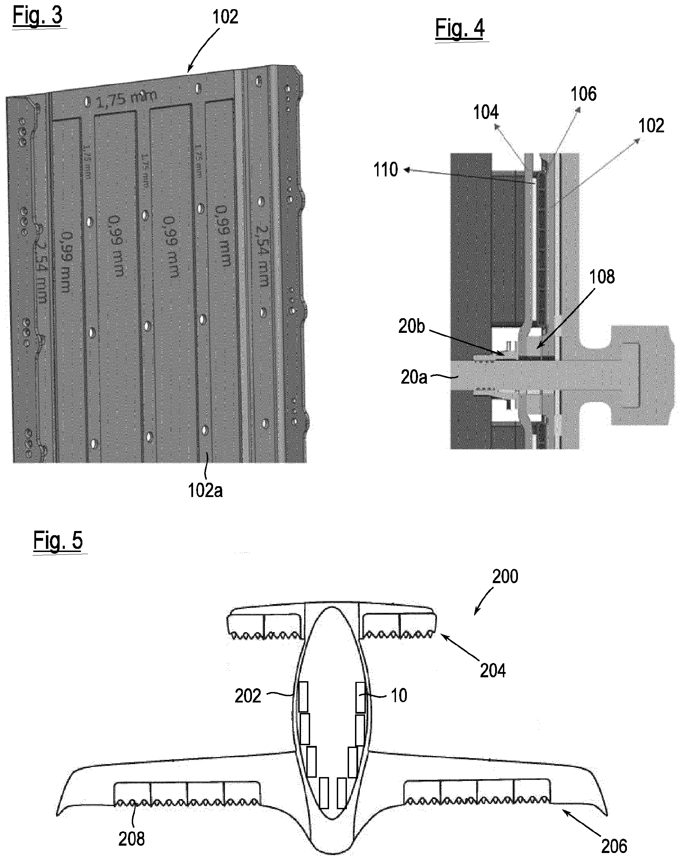

As can also be seen in Fig. 2 and again in Fig. 3, the inner wall 102 is provided with ridges 102a of increased thickness, which allow for incorporating the band-like structures of the cold plate 106 in the regions of the inner wall 102 with reduced thickness. In particular, the thickness values of the inner wall 102 are as such marked in figure 3 for the shown particular embodiment. In contrast, the outer wall 104 is formed with a substantially constant thickness. As can further be seen in Fig. 2, the cold plate 106 is formed with inlet and outlet ports 106a, which allow for circulating cooling fluid in the cold plate 106, which for this purpose is provided with suitable ducts and channels to transport said cooling fluid and dissipate heat from the battery cell stack 12. By arranging the active parts of the cold plate 106 in the region of the inner wall 102 with minimal thickness, the thermal contact between the heat source in form of the battery cells 14 and the cooling plate 106 is maximized.

Further referring to the cross-sectional view of Fig. 4 along the stacking direction S12 of the battery cell stack 12 as denoted in Fig. 1, it can be seen that the studs 20a are secured outside the sidewall 100 by means of nut elements 20b, wherein in this region, not only is a ridge 102a of the inner wall 102 provided, but also the outer wall 104 in the region of the tension stringer 108 is formed bulging away from the inner wall 102 in order to accommodate said tension stringer 108. Further reference shall be made to the layer 110 of compressible foam arranged between the cold plate 106 and the outer wall 104 for maximizing the contact area between the individual components of the casing wall structure 100.

Lastly, figure 5 in plan view shows an electrical propulsion VTOL aircraft 200 according to the present invention comprising two pairs of wings 204, 206 and a fuselage 202. Attached to the wings 204, 206 are provided a plurality of electrically driven propulsion motors 208, which are rotatable between a plurality of operating orientations around axes substantially extending along the span direction of the wings 204, 206. The electrically driven propulsion motors 208 are powered by a plurality of battery assemblies 10 as described above which are positioned within the fuselage 202 of the aircraft 200 and connected for providing electrical power to the motors 208 during their operation.

## Claims

1. Casing wall structure (100) for a battery assembly (10),
wherein the battery assembly (10) comprises at least one stack (12) of battery cells (14), and a casing with a base plate (16) and a top plate (18),
the casing wall structure (100) comprising:
- an inner wall (102) facing the battery cell stack (12),
- an outer wall (104) facing to the outside of the battery assembly (10), and
- a cold plate (106) which is sandwiched between the inner wall (102) and the outer wall (104),
wherein the inner wall (102) is at least partially formed with a smaller thickness than the outer wall (104).

2. Casing wall structure (100) according to claim 1,
wherein the cold plate (106) is adapted for circulating cooling fluid therein and provided with inlet and outlet ports (106a) for said cooling fluid.

3. Casing wall structure (100) according to any of the preceding claims,
wherein the cold plate (106) comprises a plurality of parallel band-like structures extending along the casing wall, wherein the inner wall (102) is provided with ridges (102a) of increased thickness extending between the plurality of band-like structures.

4. Casing wall structure (100) according to the preceding claim,
wherein thickness of the inner wall (102) in the region of the band-like structures is between 0.9 and 1.1 mm, preferably about 0.99 mm, and the thickness of the ridges (102a) is between 1.5 and 2.0 mm, preferably about 1.75 mm.

5. Casing wall structure (100) according to any of the preceding claims,
wherein the thickness of the outer wall (104) is between 1.0 and 1.2 mm, preferably about 1.11 mm.

6. Casing wall structure (100) according to any of the preceding claims,
further comprising at least one tension stringer (108) arranged between the inner wall (102) and the outer wall (104), wherein the at least one tension stringer (108) is fixed to a plurality of connection elements (20a) of the battery cell stack (12) extending through the inner wall (102) , preferably through one of the ridges (102a) with increased thickness.

7. Casing wall structure (100) according to the preceding claim,
wherein the outer wall (104) in the region of the at least tension stringer (108) is formed bulging away from the inner wall.

8. Casing wall structure (100) according to any of the preceding claims,
further comprising a layer (110) of compressible foam arranged between the cold plate (106) and the outer wall (104).

9. Casing wall structure (100) according to any of the preceding claims,
wherein the inner wall (102) and/or the outer wall (104) are made of composite material, in particular comprising carbon-fibre-reinforced polymer and an oxygen barrier layer, with the inner wall (102) preferably further comprising an erosion barrier layer and/or an electro-magnetic shielding layer.

10. Battery assembly (10), comprising:
- at least one stack (12) of battery cells (14), and
- a casing with a base plate (16), a top plate (18) and a plurality of side walls, wherein at least one of the side walls is formed by a casing wall structure (100) according to any of the preceding claims.

11. Battery assembly (10) according to the preceding claim,
wherein the battery cells (12) are compressed between the base plate (16) and the top plate (18) of the casing.

12. Battery assembly (10) according to any of claims 10 and 11,
wherein the at least one battery cell stack (12) further comprises at least one plate element (20) interposed between neighbouring battery cells (14), wherein preferably said at least one plate element (20) comprises a plurality of connection elements (20a) extending outside at least one of the side walls.

13. Battery assembly (10) according to the preceding claim,
wherein the at least one plate element (20) sub-divides the battery cell stack (12) into a plurality of gastight compartments, which preferably each comprise the same number of battery cells (14).

14. Battery assembly (10) according to any of claims 12 and 13,
wherein the connection elements (20a) are formed as studs which are secured outside the respective side wall by means of a nut element (20b).

15. Electrical propulsion aircraft (200), in particular with VTOL ability, comprising:
- a fuselage (202) and at least one pair of wings (204, 206),
- at least one electrical propulsion motor (208), and
- at least one battery assembly (10) according to any of claims 10 to 14.
